Europäisches Patentamt

European Patent Office

Office européen des brevets

(19)

(11) Publication number: **0 498 275 A1**

## (12) EUROPEAN PATENT APPLICATION

(21) Application number: **92101383.5**

(22) Date of filing: **28.01.92**

(51) Int. Cl.5: **B05B 11/00**, F16K 15/14

(30) Priority: **07.02.91 JP 37995/91**
**13.05.91 JP 137270/91**
**31.07.91 JP 214501/91**

(43) Date of publication of application:
**12.08.92 Bulletin 92/33**

(84) Designated Contracting States:
**DE ES FR GB IT**

(71) Applicant: **Tada, Tetsuya**
**2-6-3 Kakinokizaka, Meguro-ku**
**Tokyo(JP)**

(72) Inventor: **Tada, Tetsuya**
**2-6-3 Kakinokizaka, Meguro-ku**
**Tokyo(JP)**

(74) Representative: **Müller, Hans-Jürgen**
**Patentanwälte, Dipl.-Ing. Hans-Jürgen Müller,**
**Dipl.-Chem.Dr. Gerhard Schupfner, Dipl.-Ing.**
**Hans-Peter Gauger, Postfach 101161**
**W-8000 München 1(DE)**

(54) **A pump dispenser and a primary valve thereof.**

(57) A primary valve (46) is made of elastic material and consists of a tubular valve body (48) and a flared body (50) integrally formed together with the valve body (48), and flaring outwardly thereof so as to cause elasticity. The flared body (50) is provided at an end thereof with a flange (50a) which is pressed against the wall surface (47a) of a valve seat (47) under the elasticity of the flared body (50) so as to close the primary valve (46). As liquid is raised through a suction tube (44), it acts on the flared body (50) through a passage (52a) formed in the valve body (48) and a through hole (47b) formed in the valve seat (47), flexes the flared body (50) and separates the flange (50a) from the wall surface (47a) of the valve seat (47) to open the primary valve (46).

F I G. 9

This invention relates to a pump dispenser which is fitted to the mouth portion of a liquid container and is adapted to slide a piston in cooperation with the depression of a nozzle head such that the liquid in the container is sucked and pressurized to be dispensed, and relates to a primary valve of the pump dispenser.

In general, the cylinder of a pump dispenser is fitted to the mouth portion of a liquid container by means of a bottle cap. When a nozzle head or a push button having a piston fixed to the lower end thereof is depressed, the piston slides in the cylinder, and the liquid in the container is sucked into a pump chamber defined in the cylinder and pressurized to flow out.

A suction tube is fixed to the lower portion of the cylinder, and an inlet passage is formed in the lower portion of the cylinder so as to communicate with the suction tube. An outlet passage is formed in the nozzle head and extends from the piston to the nozzle head so as to communicate with the pump chamber. A primary valve for controlling the liquid flow from the interior of the container into the cylinder is positioned in the inlet passage in the lower portion of the cylinder, and a secondary valve for controlling the liquid flow from the cylinder to the outlet passage is positioned in the outlet passage of the piston or the nozzle head.

A return spring such as a compression coil spring is provided in the cylinder and urges outwardly the nozzle head as well as the piston in such a manner that the nozzle head is projected to be located at an outward position (an initial position or a projected position). As the nozzle head is depressed against the urging force of the return spring, the piston slides in the cylinder. The distance between the outward position and the inward position (depressed position) of the nozzle head is equal to the stroke of the piston.

In general, a pump dispenser is transported and displayed in a shop in such a manner that the cylinder is fitted by means of a bottle cap to the mouth portion of a container filled with liquid to be dispensed. A steel ball is generally used a primary valve and is closed by being pressed against a valve seat under its own weight. Consequently, the liquid in the container is prevented from leaking out through the primary valve as long as the container is held substantially vertically.

The piston slides in cooperation with the depression of the nozzle head to cause the liquid to flow out or dispense. Thus, in order to avoid the leakage of the liquid, it is necessary to prevent the unfavorable movement of the nozzle head during transportation and display of the pump dispenser together with the container.

The nozzle head together with the piston is, therefore, locked at the depressed position. Even if the nozzle head is erroneously depressed, the sliding of the piston is indirectly prevented, thereby suppressing the leakage of the liquid.

The locking of the nozzle head at the depressed position or inward position renders the pump dispenser to be smaller in size by the length corresponding to the stroke of the piston. Consequently, the pump dispenser can be packed in a small size and the space required for displaying is reduced, resulting in efficient transportation and display of the pump dispenser.

In case where the pump dispenser is inclined, the primary valve such as a steel ball is likely to be separated from the valve seat and opened. For the avoidance of this disadvantage, there has been proposed means for forcibly pressing the primary valve against and locking the same to the valve seat by means of a valve holder provided integrally on or separately from the piston when the nozzle head is locked at the depressed position (as disclosed in Japanese Examined Patent Application Publications Nos. 63-010305 and 60-040899).

With this structure, it is unnecessary to hold the pump dispenser substantially vertically, and it can take any position during transportation. Further, double-locking attained by the locking of the nozzle head and the primary valve ensures the prevention of the liquid leakage.

When the pump dispenser falls or is inclined without locking the nozzle head during its use, the primary valve, i.e., the steel ball is separated from the valve seat and the liquid immediately leaks out of the container through the primary valve. Thus, it is necessary to lock the nozzle head frequently and it is very cumbersome to do so.

In the prior art, the nozzle head is locked at the depressed position in such a way that an externally threaded portion on the lower portion of the nozzle head is engaged with an internally threaded portion in the upper portion of the cylinder (Japanese Examined Utility Model Application Publication No. 03-009813, for example), or in such a way that an engaging projection provided on the lower end of the nozzle head is engaged with a corresponding engaging projection formed on the upper end of the cylinder (Japanese Examined Utility Model Application Publication No. 60-028521, for example).

With the pump dispenser of this structure, the nozzle head cannot be locked without accompanying relative rotation between the nozzle head and the cylinder. Further, the externally threaded portion on the lower portion of the nozzle head, the engaging projection on the upper end on the cylinder, etc. are so exposed that the ornamental appearance of the pump dispenser is deteriorated.

The relative rotation between the nozzle head and the cylinder must be made by turning the cylinder with the nozzle head fixed or by revolving the piston head with the cylinder fixed. This makes it difficult to automatize the assembly of the nozzle head into the cylinder and obstructs the automatic assembly of the pump dispenser.

It is therefore a primary object of this invention to provide a pump dispenser in which liquid in a container can be prevented from leaking when the container falls or is inclined in case where the nozzle head fails to be locked.

It is another object of this invention to provide a primary valve in which liquid in a container can be prevented from leaking when the container falls or is inclined in case where the nozzle head fails to be locked.

It is a further object of this invention to provide a pump dispenser in which a nozzle head is assembled into a cylinder without accompanying their relative rotation.

In order to achieve the primary object, a pump dispenser according to this invention is provided with a primary valve which is not a steel ball but an elastic valve member made of elastic material such as synthetic resin or elastomer and integrally formed with a valve body and a flared body. The valve body of the primary valve is forcibly pressed against a valve seat upon locking the nozzle head, and the flared body extends outwardly and has elasticity such that an end of the flared body is pressed against the wall surface of a valve seat under its own elasticity.

According to this invention, a piston is threadably engaged with a cylinder under elasticity so as to be assembled thereinto, and an externally threaded portion is formed on the lower portion of the piston. An internally threaded portion engageable with the externally threaded portion formed on the piston upon locking a nozzle head is formed in the cylinder, and a slit is formed on the upper portion of the cylinder so as to give elasticity to the internally threaded portion.

Fig. 1 is a longitudinal sectional view of a pump dispenser according to the first embodiment of this invention, in which a nozzle head being disposed at its initial position;

Fig. 2 is an enlarged longitudinal sectional view of a part of the pump dispenser;

Fig. 3 is an enlarged plan view of a cylinder;

Fig. 4(A) is a schematic longitudinal sectional view of a die assembly for molding the cylinder;

Fig. 4(B) is an enlarged view of the portion B in Fig. 4(A);

Fig. 5 is a longitudinal sectional view of the pump dispenser, in which a nozzle head and a piston being locked;

Fig. 6 is a longitudinal sectional view of a modification of the pump dispenser;

Fig. 7 is an enlarged longitudinal sectional view of a part of the pump dispenser;

Fig. 8 is a schematic perspective view of the primary valve;

Fig. 9 is an enlarged longitudinal sectional view of a part of the pump dispenser when the primary valve is opened or unlocked;

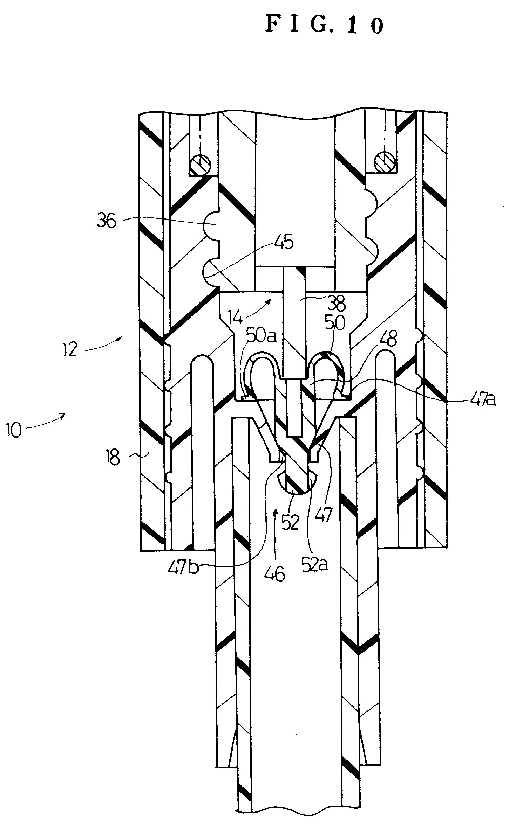

Fig. 10 is a longitudinal sectional view of the part of the pump dispenser when the primary valve is locked;

Fig. 11(A) and 11(B) are side views of each of other modifications of the primary valve;

Fig. 12 is a perspective view of a piston and the lower portion of a cylinder;

Fig. 13 is an exploded view of inner elements to be assembled into the lower portion of the cylinder;

Fig. 14 is an exploded view of a pump dispenser;

Fig. 15 is a front view of the assembled pump dispenser;

Fig.16 is a longitudinal sectional view of an pump dispenser according to the second embodiment of this invention, which is provided with sealing means and in which a nozzle head is disposed at its initial position;

Fig. 17 is a longitudinal sectional view of the pump dispenser, in which the nozzle head and a piston being locked in the depressed position;

Fig. 18 is a longitudinal sectional view of a part of the pump dispenser according to the third embodiment of this invention;

Fig. 19 is a longitudinal sectional view of a part of a pump dispenser according to the fourth embodiment of this invention;

Fig. 20 is a longitudinal sectional view of a part of a pump dispenser according to the fifth embodiment of this invention;

Fig. 21 is a longitudinal sectional view of a part of a pump dispenser according to the sixth embodiment of this invention; and

Fig. 22 is a longitudinal sectional view of a part of a pump dispenser according to the seventh embodiment of this invention.

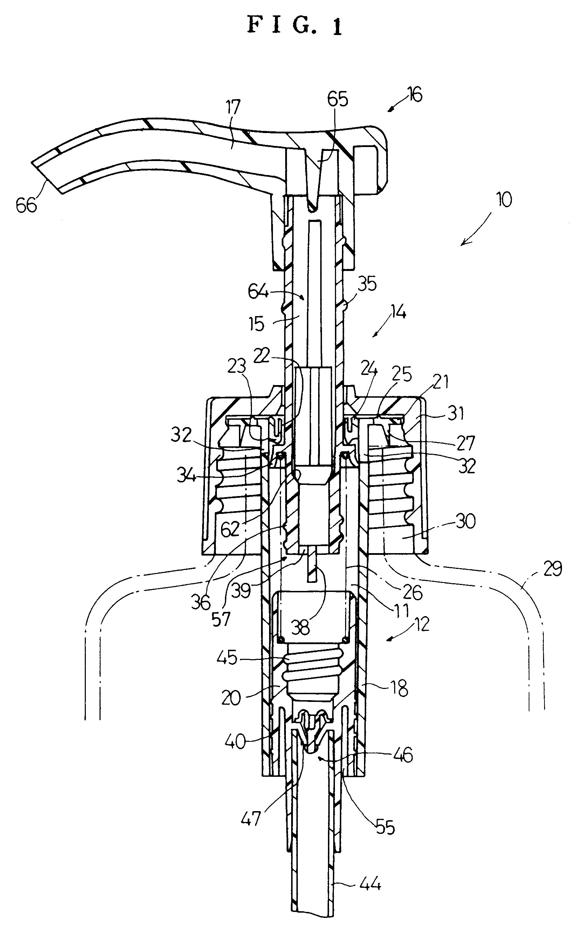

As shown in Fig. 1, a pump dispenser 10 according to the first embodiment of this invention comprises a cylinder 12 having a pump chamber 11 defined therein, a piston 14 reciprocably disposed in the cylinder and a nozzle head (or a push button) 16 fixed to the upper end of the piston and having a shape such as the bill of a bird. The cylinder 12, the piston 14 and the nozzle head 16 are made of synthetic resin, such as polyethylene, by means of injection molding.

The piston 14 and the nozzle head 16 have hollow portions 15 and 17 to form outlet passages of liquid.

The cylinder 12 is divided into two sections, one section being an upper portion 18 having the open upper and lower ends and the other section being a lower section 20 having the upper end to be fitted in the upper portion 18. A flange 21 is formed on the upper end of the upper portion 18 of the cylinder 12, and an annular stop 22 is formed on the inner periphery of the cylinder 12 so as to be disposed under the flange 21.

A return spring such as a compression coil spring 26 is housed in the cylinder 12 and urges the piston 14 and the nozzle head 16 outwardly in an integral manner.

The pump dispenser 10 is detachably mounted on the mouth portion 30 of a liquid container 29 by means of a bottle cap 31 by holding the flange 21 of the cylinder 12 between the mouth portion 30 of the container 29 and the bottle cap 31.

Generally, the dispenser 10 is mounted on the mouth portion 30 of the container 29 by engaging an externally threaded portion formed on the mouth portion 30 of the container 29 with an internally threaded portion formed in the bottle cap 31. However, the dispenser 10 may be fixed to the container 29 by a way other than the use of the bottle cap. For example, this may be done by fixing the cylinder 12 to the mouth portion 30 of the container 29 or by welding the cylinder 12 to the mouth portion 30.

In order to prevent negative pressure from being generated in the interior of the container 29 when liquid flows out of the container 29, two negative-pressure preventing holes (vent holes) 32 extending through the flange 21 are formed circumferentially separated by 180° in the side wall of the upper portion 18 of the cylinder 12, for example.

A flared seal 34 is integrally formed with the lower end of the piston 14 and is in sliding contact with the inner periphery of the upper portion 18 of the cylinder 12. The flared seal 34 constitutes the upper spring seat of the return spring 26 and abuts against the stop 22 of the cylinder 12 at the initial position (the outward position) of the piston 14, i.e., the nozzle head 16. At the initial position of the nozzle head 16, the flared seal 34 is disposed under the vent holes 32.

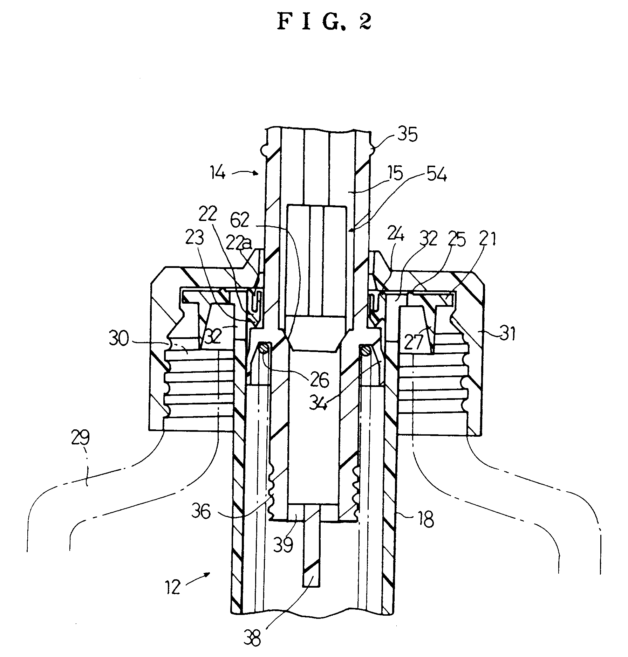

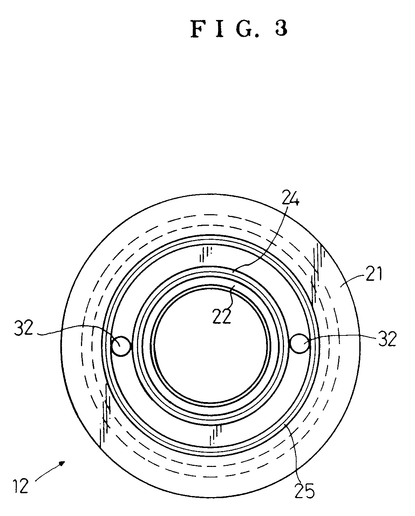

As seen from Figs. 2 and 3 in addition to Fig. 1, a seal ring 23 is provided on the undersurface of the stop 22 of the cylinder 12, and another seal ring 24 is formed on the upper surface of the flange 21 of the piston 14 so as to be disposed radially inside of the vent holes 32. The seal ring 23 is adapted to be pressed against the upper surface of the flared seal 34 of the piston 14 and the seal sing 24 is adapted to be pressed against the undersurface of the bottle cap 31, respectively.

A further seal ring 25 is formed on the upper surface of the flange 21 of the cylinder 12 so as to be disposed radially outside of the vent holes 32 and is designed to be pressed against the inner surface of the bottle cap 31. A still further seal 27 is formed on the undersurface of the flange 21 to be pressed against the mouth portion 30 of the container 29.

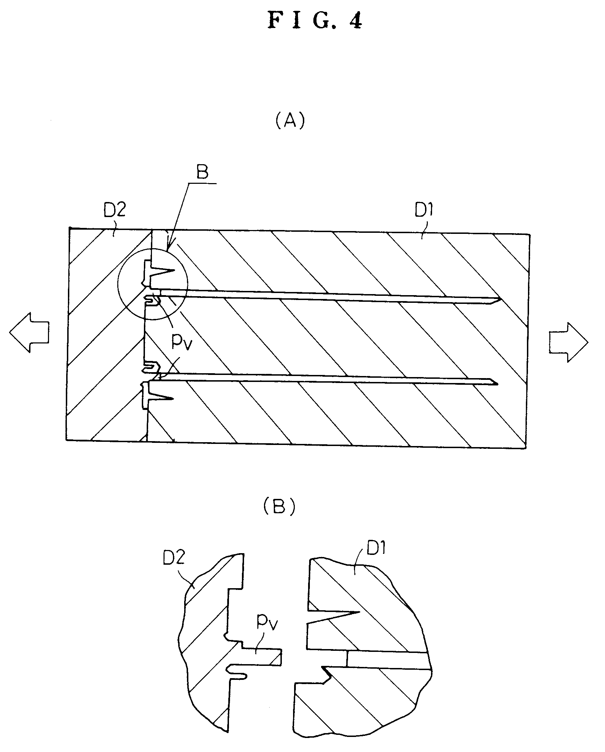

In the embodiment, the vent holes 32 extend through the flange 21 and are formed in the side wall of the cylinder 12. Pins Pv for forming the vent holes 32, therefore, do not extend in the direction in which they cross the axis of the cylinder 12 but in the direction parallel with the axis of the cylinder (see Figs. 4(A) and 4(B) which is an enlarged view of portion B in Fig. 4(A)).

As shown in Fig. 4(A), the die assembly of the cylinder 12 can comprise a pair of dies D1 and D2 which slide in the direction in parallel with the axis of the cylinder 12. The number of dies is reduced to two from four which is necessary for the conventional cylinder die assembly. Further, the dies of the conventional cylinder slide in two directions, one direction crossing the axis of the cylinder and the other direction being parallel therewith. With this invention, on the contrary, it is sufficient that the dies may slide only in one direction.

In this regard, the dies can be designed freely and thus the structure of the dies is simplified. The cycle of molding the cylinder 12 is shortened, and cylinders 12, i.e., pump dispensers 10 can be molded at high speed and thus in great quantities at low cost.

When the nozzle head 16 is not depressed and the piston 14 is held at the initial position, the piston 14 is pressed against the seal ring 23 on the undersurface of the stop 22 by the urging force of the return spring 26. The bottle cap 31 is threadably engaged with the container 29 in such a manner that the flange 21 is held between the bottle cap 31 and the mouth 30 of the container 29 and thus the seal rings 24 and 25 which sandwich the vent holes 32 are pressed against the inner surface of the bottle cap 31.

The liquid in the container 29 would leak through the vent holes 32. Since, however, the seal rings 23 and 24 are pressed and liquid tightness is ensured, the liquid flow in the radial inner direction is suppressed by the seal rings 23 and 24. Further, liquid tightness is also ensured by the seal ring 25, and the liquid flow in the radial outer direction is hindered thereby.

Accordingly, the provision of the seal rings 23, 24 and 25 fully protects the leakage of the liquid through the vent holes 32. The seal rings 23, 24 and 25 extend along the axis of the cylinder 12 and hence they are easily formed. The dies for molding the cylinder 12 is not complicated in structure and the cylinder can be molded at high speed.

Instead of the seal rings 24 and 25, O-rings or the like may be arranged between the flange 21 and the bottle cap 31. It should be pointed out, however, that the number of parts is not increased, the dispenser is easily formed and the leakage of the liquid easily prevents in the simple structure, when the pump dispenser has seal rings 24 and 25 arranged on the flange 21 as shown in Figs. 2 and 3.

With the prior art, a packing or a gasket is held between the mouth portion of the container and the flange of the cylinder to ensure the liquid tightness.

On the contrary, the liquid tightness in this invention is ensured by pressing the seal ring 27 against the mouth portion 30 of the container 29, and consequently the liquid dose not leak from the container 29 through the mouth portion 30 and the bottle cap 31. Therefore, it is unnecessary to provide a packing between the mouth portion 30 of the container 29 and the flange 21 and the number of parts is reduced. The seal ring 27 also extends along the axis of the cylinder 12 and this arrangement does not make the dies of the cylinder complicated.

With this embodiment, the seal rings 23, 24, 25 and 27 have a substantially triangular shape. However, the shape of each seal ring is not limited to the triangular shape but any shape is possible as long as liquid tightness can be ensured.

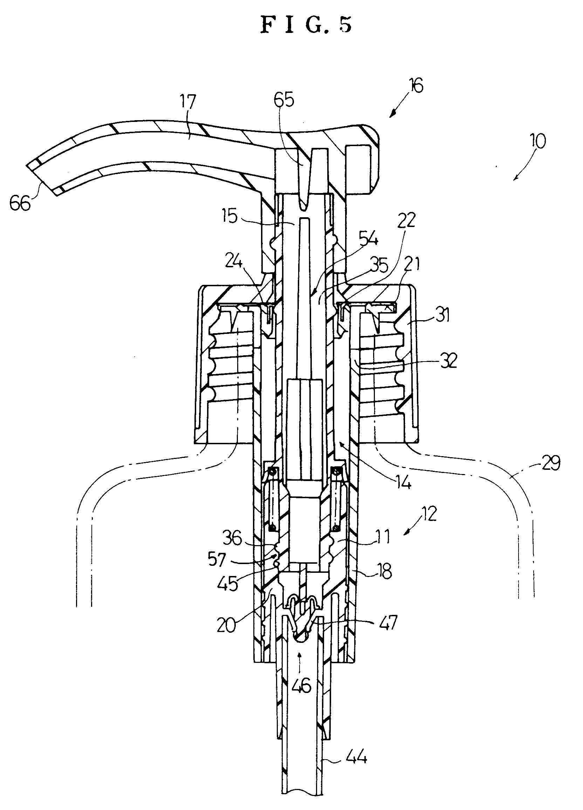

An annular projection 35 is formed on such a portion of the outer periphery of the piston 14 that the projection 35 can slidably contact with the stop 22 of the cylinder 12 (see Fig. 5), when the nozzle head 16 is depressed and locked as well as the piston 14. The sliding contact of the projection 35 of the piston 14 with the stop 22 of the cylinder 12 ensures liquid tightness and avoids the leakage of the liquid at the inward position of the nozzle head 16.

In this embodiment, an annular groove 22a is formed in the upper surface of the stop 22 so as to give elasticity to the stop 22. The projection 35 is closely contacted with the stop 22 by the elasticity produced by the groove 22a, and the leakage of the liquid is hindered without fail. However, the groove 22a may take any from, and may be arranged in any other way as long as it provides elasticity.

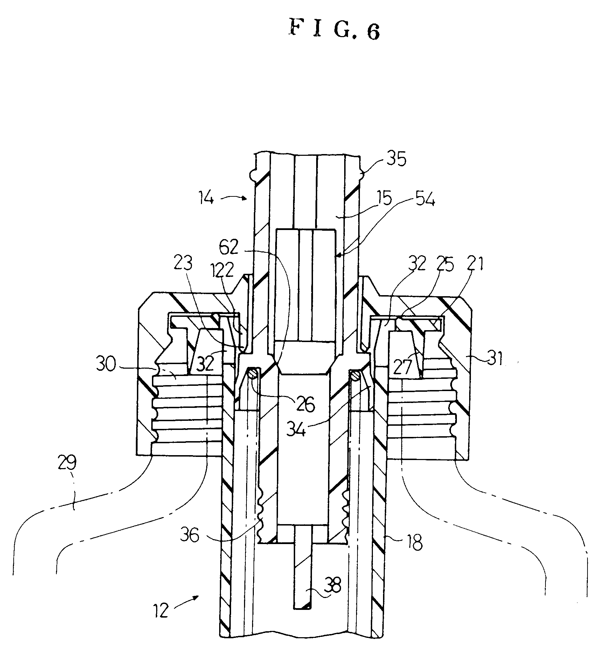

Referring to Fig 6, a stop 122 may be suspended from the bottle cap 31 and the seal ring 23 may be formed on the lower end of the stop 122. This structure assures the elimination of the leakage of the liquid through vent holes 32 and it is unnecessary to provide the seal ring 24 on the upper surface of the flange 21. Since the stop 122 is suspended from the undersurface of the bottle cap 31, the stop 122 can be made longer. Elasticity for closely contacting the projection 35 with the stop 122 is also provided in this arrangement.

An externally threaded portion 36 is formed on the lower end portion of the piston 14 and a valve holder 38 extends downward from the lower end of the piston 14. A plurality of (four, example) holes 39 are formed in the lower end of the piston 14 so as to surround the valve holder 38 and cause the pump chamber 11 in the cylinder 12 to communicate with the outlet passage 15 in the piston 14.

The lower portion 20 of the cylinder 12 is adapted to be inserted in the upper portion 18 of the cylinder 12 with a space left between the upper and lower portions 18 and 20. As seen from Fig. 1, annular engaging projections 40 are formed on the outer periphery of the lower portion 20 of the cylinder 12. In this embodiment, four engaging projections 40 are arranged so as to be spaced substantially equidistantly. However, the number and the arrangement of them are not limited to those as shown in the embodiment.

The cylinder 12 is assembled in such a way that the engaging projections 40 are fitted in the upper portion 18 of the cylinder 12.

The lower portion 20 of the cylinder 12 has an open upper end and a stepped lower end with a smaller diameter. A suction tube 44 is fitted in the lower portion 20 of the cylinder 12 from the bottom and a stepped hole is formed in the lower portion 20 of the cylinder 12. In this embodiment, the stepped hole has three steps in which the upper stepped portions have smaller diameters than the lower stepped portions, and an internally threaded portion 45, with which the externally threaded portion 36 is engaged when the nozzle head 16 is fully depressed, is formed in an intermediate stepped portion of the lower portion 20 of the cylinder 12.

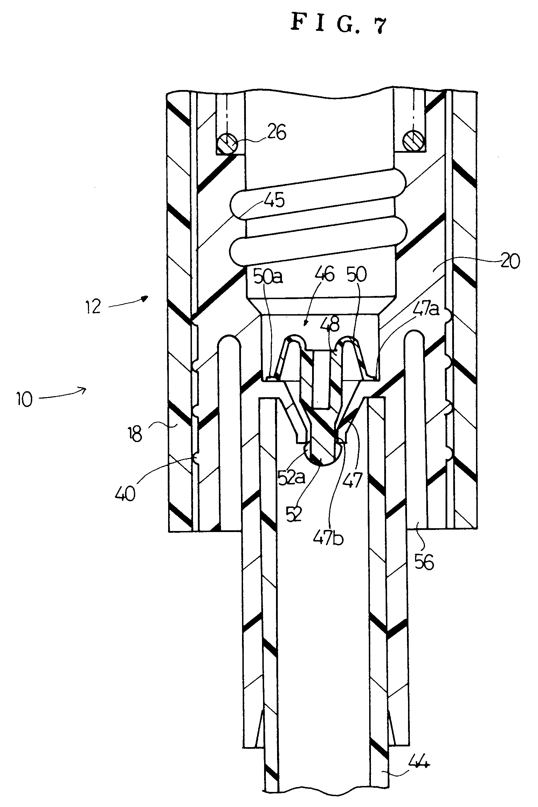

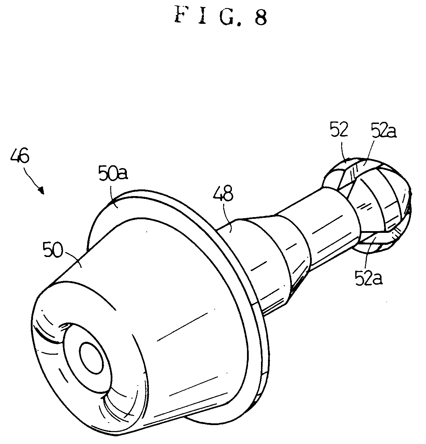

A valve seat 47 for receiving a primary valve 46 is provided under the internally threaded portion 45 in the lower portion 20 of the cylinder 12. As seen from Figs. 7 and 8 in addition to Fig. 1, the primary valve 46 comprises a tubular valve body 48 and an elastic flared body 50 integrally formed together with valve body 48 and flaring outwardly thereof. The primary valve 46 is made of synthetic resin such as polypropylene or polyethylene.

The flared body 50 is provided at an end thereof with a flange 50a which is pressed under its own elasticity against the wall surface 47a of the valve seat 47 to ensure liquid tightness and to disconnect the pump chamber 11 in the cylinder 12 from the interior of the container 29. Instead of providing the flange 50a, an end of the flared body 50 may be directly pressed against the wall surface 47a of the valve seat 47.

The valve body 46 is made hollow so as to get the thickness uniform and is provided at its tip end (the lower end) with a swollen portion 52 for preventing the valve body from slipping off. The valve seat 47 has a well known shape in which a taper surface extends downward from the base portion and a through hole 47b is formed in the distal portion. The swollen portion 52 has, for example, a hemispherical portion which has a larger diameter than the through hole 47b and is adapted to expand the same so as to pass therethrough. A plurality of (four, for example) liquid passages 52a taking a from of longitudinal grooves are formed in the surface of the swollen portion 52.

The swollen portion 52 of the valve body 48 of the primary valve 46 having the above-mentioned structure is pushed in the through hole 47b of the valve seat 47 and is caused to pass therethrough. The swollen portion 52 is made larger than the through hole 47b of the valve seat 47, as already explained. Thus, the flange 50a is pressed against the wall surface 47a of the valve seat 47 by the elasticity of the flared body 50, and at the same time, the upper surface of the swollen portion 52 is pressed against tip end of the valve seat 47 to be elastically fitted to the valve seat 47 without the slipping off .

In this way, the primary valve 46 is elastically fitted to the valve seat 47 with ease by pushing the swollen portion 52 in the through hole 47b of the valve seat 47 without slipping off the valve seat 47. With the primary valve 46, the flange 50a of the flared body 50 is pressed against the wall surface 47a of the valve seat 47 and always interrupts the communication between the interior of the container 29 and the cylinder 12. In consequence, the primary valve 46 is never opened even if the pump dispenser 10 falls or is inclined, and thus the packed pump dispenser can take any posture during the transportation.

Even if the pump dispenser 10 falls or is inclined while it is being used, the primary valve 46 is never opened and the liquid dose not leak from the container 29. It is unnecessary to lock the nozzle head 16 in order to prevent the liquid leakage and consequently the pump dispenser 10 is utilized conveniently.

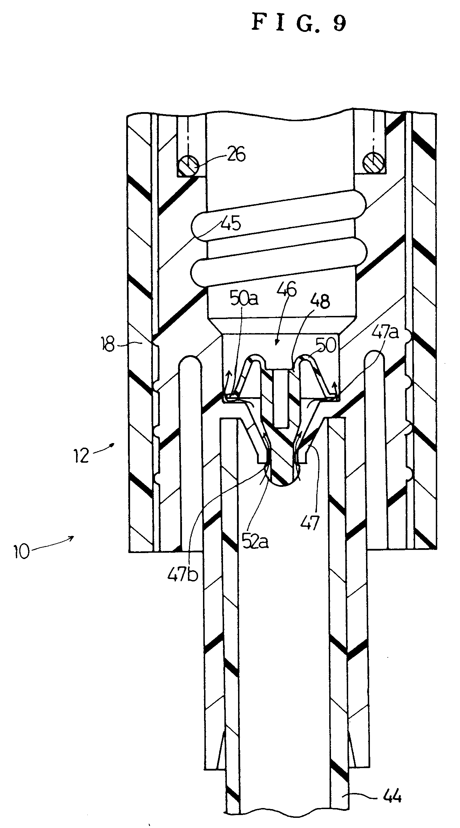

When the reciprocating movement of the piston 14 in cooperation with the depressing operation of the nozzle head 16 causes negative pressure in the pump chamber 11 of the cylinder 12, the liquid is sucked from the container 29 into the suction tube 44 and flows from the passages 52a into the swollen portion 52 of the valve body 48 through the through hole 47b of the valve seat 47 (see Fig. 9). The liquid expands the flared body 50 against its elasticity, separates the flange 50a from the wall surface 47a of the valve seat 47 and flows into the pump chamber 11 of the cylinder 12.

It is sufficient for the passages 52a to lead the liquid raised in the suction tube 44 to the flared body 50. In place of these passages, longitudinal grooves may be formed as liquid passages in the inner periphery of the through hole 47b of the valve seat 47, or a through hole may be formed as a liquid passage in the valve seat 47. Means for preventing the primary valve 46 from slipping off is not limited to the swollen portion 52 as indicated in the drawings.

As the nozzle head 16 is depressed and locked, the valve holder 38 on the lower end of the piston 14 flexes the flared body 50 and causes taper surface of the valve body 48 to be forcibly pressed against the valve seat 47. As a result, the primary valve 46 is locked and the liquid leakage through the primary valve 46 is fully suppressed.

With this embodiment, the flange 50a of the flared body 50 is pressed against the wall surface 47a of the valve seat 47 under elasticity and the taper surface of the valve body 48 is forcibly pressed against the valve seat 47 so as to be locked. In other words, the primary valve 46 comprises first portions (the flange 50a and the wall surface 47a of the valve seat 47) to be opened under liquid pressure and locked closed second portions (the taper surface of the valve body 48 and the valve seat 47) which are provided separately from the first portions.

The flared body 50 functioning as a valve spring is adapted to be flexed largely, and its thickness, length and the like can be changed. This makes it easy to design the primary valve 46 having the optimum elasticity in accordance with the kind of liquid to be dispensed.

The primary valve 46 can be readily formed into such a shape that it does not easily slip off the valve seat 47. It is, therefore, unnecessary to provide projections for preventing the slipping-off, whereby simplifying the structure of the lower portion 20 of the cylinder 12.

The liquid dose not corrode the primary valve 46 made of synthetic resin. The primary valve 46 is not always made of synthetic resin but may be made of elastomer (rubber). In case it is made of synthetic resin, however, the primary valve 46 gets suitable elasticity and manufactured at low cost.

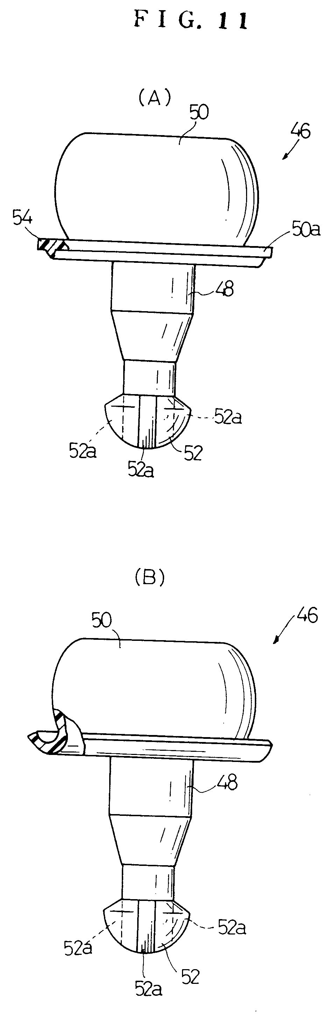

As shown in Fig. 11(A), the flange 50a is formed with an annular projection 54 having a substantially triangular cross section so as to make line contact with the wall surface 47a of the valve seat 47. With this structure, secure liquid tightness is obtained between the primary valve 46 and the valve seat 47. Line contact means is not limited to the one as shown in Fig. 11(A). As shown in Fig. 11(B), for example, the edge portion of the flared body 50 may be outwardly folded. In spite of the simple structure of the flared body 50 as shown in Fig. 11(B), the line contact is ensured.

As seen from Fig. 1, the return spring 26 is provided over the internally threaded portion 45 between the hole in the lower portion 20 of the cylinder 12 and the flared seal 34 of the piston 14. An annular groove 56 is formed in the lower end of the lower portion 20 of the cylinder 12 such that the lower portion 20 of the cylinder 12 made of synthetic resin is securely uniformly cooled.

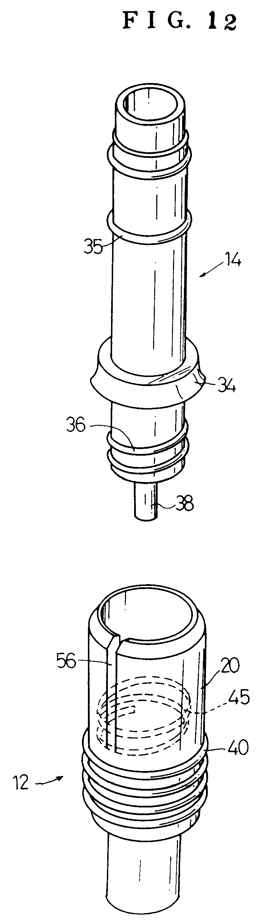

For giving elasticity to the internally threaded portion 45 in the lower portion 20 of the cylinder 12, a slit 56 is formed in the part of the lower portion 20 of the cylinder 12 which part extends from its upper end to the region of the internally threaded portion 45 (Fig. 12). As the piston 14 is pushed in the cylinder 12, the externally threaded portion 36 of the lower end of the piston 14 expands the upper end of the lower portion 20 of the cylinder 12 and is engaged with the internally threaded portion 45 in the lower portion 20 of the cylinder 12, whereby the piston 14 and the nozzle head 16 are locked.

Locking means 57 for locking the piston 14 and the nozzle head 16 comprises the externally threaded portion 36 on the piston 14, the internally threaded portion 45 in the cylinder 12 and the slit 56.

With the structure in which the slit 56 is formed in the cylinder 12 and elasticity is given to the internally threaded portion 45, the externally threaded portion 36 on the piston 14 can be threadably engaged with the internally threaded portion 45 in the cylinder 12 without making relative rotational movement between the cylinder 12 and the piston 14, facilitating automatic assembly of the piston 14 into the cylinder 12. Since not only the internally threaded portion 45 in the lower portion 20 of the cylinder 12 but also the externally threaded portion 36 on the lower end of the piston 14 are hidden in the cylinder 12, the ornamental appearance of the pump dispenser 10 is not deteriorated.

Needless to say, the clearance between the upper portion 18 and the lower portion 20 of the cylinder 12 is selected to have such a dimension that the lower portion 20 of the cylinder dose not lose its elasticity at the internally threaded portion 45. One slit 56 is formed in the embodiment, but two or more slits may be formed.

As shown in Fig. 1, a valve seat 62 is provided in the outlet passage 15 in the piston 14 and a secondary valve 64 is housed in the piston 14. The secondary valve 64 has a rod form and its pressing rod 65 extends from the upper edge of the nozzle head 16 into the outlet passage 15 to prevent the secondary valve 64 from escaping. The distal end of the outlet passage 17 froms an outlet opening 66.

The pump dispenser 10 is assembled according to the following steps.

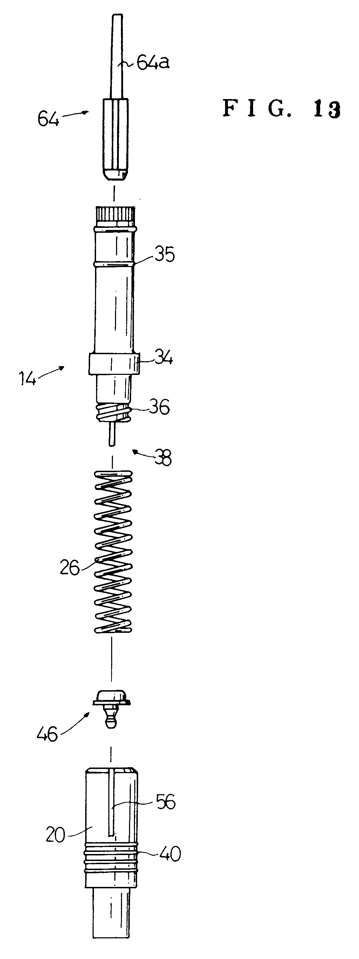

(1) The inner elements to be housed in the cylinder 12, i.e., the secondary valve 64, the piston 14, the return spring 26 and the primary valve 46 are assembled into the lower portion 20 of cylinder 12 to from an integral structure. For easy formation of the integral structure, the secondary valve 64, the piston 14, the return spring 26, the primary valve 46 and the lower portion 20 of the cylinder 12 are arranged serially in this order, as shown in Fig. 13.

Thereafter, the secondary valve 64 and the primary valve 46 are put in the piston 14 and the lower portion 20 of the cylinder 12, respectively, and the piston 14 is pushed in the lower portion 20 of the cylinder 12. The slit 56 allows the externally threaded portion 36 on the lower end of the piston 14 to expand the upper end of the lower portion 20 of the cylinder 12 and then to threadably engage the internally threaded portion 45 in the lower portion 20 of the cylinder 12 without accompanying rotation.

After the externally threaded portion 36 and the internally threaded portion 45 have threadably been engaged with each other, the upper end of the lower portion 20 of the cylinder 12 returns to the original shape and securely holds the piston 14, such that the secondary valve 64, the piston 14, the return spring 26, the primary valve 46 and the lower portion 20 of the cylinder 12 are integrally connected to each other.

For convenience of explanation, the combination of the lower portion 20 of the cylinder 12 and the inner elements (the secondary valve 64, the piston 14, the return spring 26 and the primary spring 46) integrally assembled into the lower portion 20 of the cylinder 12 is referred to as an inner assembly 68.

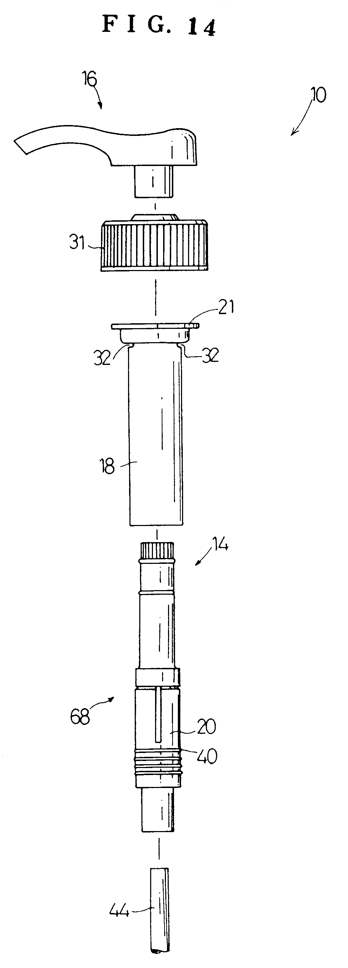

(2) As shown in Fig. 14, the nozzle head 16, the bottle cap 31, the upper portion 18 of cylinder 12, the inner assembly 68 and the suction tube 44 are arranged serially.

As the suction tube 44 is inserted in the inner assembly 68 from above through the bottle cap 31 and the upper portion 18 of the cylinder 12, the inner assembly 68 is pushed in from the bottom.

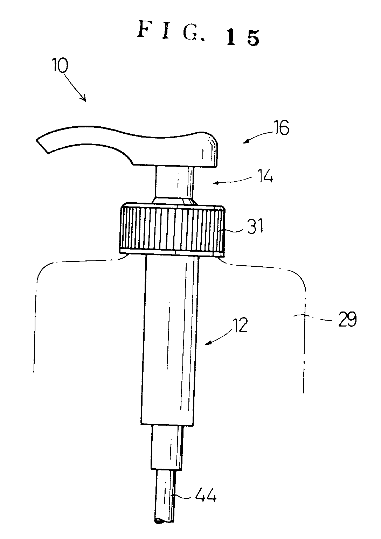

In this state, the upper portion 18 of the cylinder 12 is assembled into the lower portion 20 of the cylinder 12 of the inner assembly 68 from above and the upper and the lower portions 18 and 20 of the cylinder 12 are integrally connected together, and the nozzle head 16 is fixedly engaged with the upper end of the piston 14 of the inner assembly 68 through the bottle cap 31. At the same time, the suction tube 44 is fixedly engaged with the lower portion 20 of the cylinder 12 of the inner assembly 68. Consequently, the pump dispenser 10 can be assembled as shown in Fig. 15.

The externally threaded portion 36 on the piston 14 can threadably engage with the internally threaded portion 46 in the lower portion 20 of the cylinder 12 only by applying pressing forces to the piston 14 and the lower portion 20 of the cylinder 12, and this arrangement makes unnecessary the rotation of the nozzle head 16 which hinders the automatic assembly of the pump dispenser 10. As a result, the pump dispensers 10 can be readily automatically assembled and their productivity is enhanced.

This process of assembling the pump dispenser 10 is only an example. It may be assembled in the other order. For example, the piston 14 in which the secondary valve 64 has previously been housed may be disposed over the lower portion 20 of the cylinder 12 in which the return spring 26 and the primary valve 46 have previously been housed, and then the lower portion 20 of the cylinder 12 may be moved upward to be pushed in the piston 14, thereby forming the inner assembly 68. In any way, the pump dispenser 10 can be assembled according to a small number of steps without relative rotational movement between the piston 14 and the cylinder 12, facilitating its automatic assembly.

After having been mounted on the container 29 filled with liquid by threadably engaging the bottle cap 31 with the mouth portion 30 of the container 29 and having been packed, the pump dispenser 10 is transported and displayed. Threadable engagement of the bottle cap 31 with the mouth portion 30 of the container 29 requires rotational movement therebetween. This can be done without obstruction by many kinds of special machines which have already been developed for this purpose.

The pump dispenser 10 is assembled after locking the piston 14 and the nozzle head 16 at the depressed position and mounted on the container 29. Thus, the nozzle head 16 is prevented from being unexpectedly depressed due to careless handling of the pump dispenser 10 during the transportation or display or due to falling, and the leakage of the liquid is avoided. Because the nozzle head 16 is being depressed, the pump dispenser 10 is packed in a small size. The display space is also made small. In this regard, effective transportation and display can be carried out.

When the nozzle head 16 is locked, the primary valve 46 is simultaneously locked by the valve holder 38 of the piston 14. In other words, the pump dispenser 10 is double-locked and leakage of the liquid is securely prevented. Even if the nozzle head 16 is unlocked and then the primary valve 64 is unlocked, the primary valve 46 is closed between an end of the flared body 50 and the wall surface 47a of the valve seat 47. The liquid does not leak through the primary valve 46 even if the pump dispenser 10 falls or is inclined.

With the prior art, the flange, the vent holes, the valve seat of the primary valve and the projections for preventing the primary valve from escaping are formed in a single piece of the cylinder.

The cylinder must have three or four step structure, leading to a complicated construction.

With this embodiment, however, the cylinder 12 is divided into the upper portion 18 and the lower portion 20. The lower portion 20 is fitted in the upper portion 18 to manufacture the cylinder 12. The flange 21 and the vent holes 32 are formed in the upper portion 18 of the cylinder 12, and the valve seat 47 is provided in the lower portion 20 of the cylinder 12 such that the elements 21, 32 and 47 are distributed to the upper and lower portions 18 and 20 of the cylinder 12.

Accordingly, the upper portion 18 of the cylinder 12 has a simple structure which has no step and its dies are simplified. The lower portion 20 of the cylinder 12 is also made simple as compared with the prior art single-piece cylinder formed by a single set of dies. If the disadvantage caused by the processes in which the upper and lower portions 18 and 20 are separately formed by two sets of dies and they are assembled together is considered, the total cost of the dies is reduced, and cylinders 12 can be molded at high speed and at low cost.

When the piston 14 is unengaged with the lower portion 20 of the cylinder 12 and the piston 14 and the nozzle head 16 are unlocked, the nozzle head 16 as well as the piston 14 is pushed outwardly by means of the urging force of the return spring (the compression spring) 26. The nozzle head 16 is moved to the initial position (the projected position) at which the flared seal 34 abuts against the stop 22 of the cylinder 12 (Fig. 1).

After the piston 14 is turned in a counterclockwise direction to separate from the lower portion 20 of the cylinder 12, the nozzle head 16 is moved between the position at which the externally threaded portion 36 on the lower end of the piston 14 is not engaged with the internally threaded portion 45 and the initial position (the projected position), and the piston 14 is reciprocated in the cylinder 12. Then, the liquid flows from the container 29 into the pump chamber 11 in the cylinder 12 and is pressurized. The pressurized liquid flows out of the outlet opening 66 through the holes 39 in the lower end of the piston 14, the secondary valve 64 and the outlet passages 15 and 17.

The nozzle head 16 has a bill shape but may take other various forms. A spinner (a swirl generating member) may be provided in the outlet passage 17 in the nozzle head 16, and the liquid swirled by the spinner may be sprayed out of the outlet opening 66.

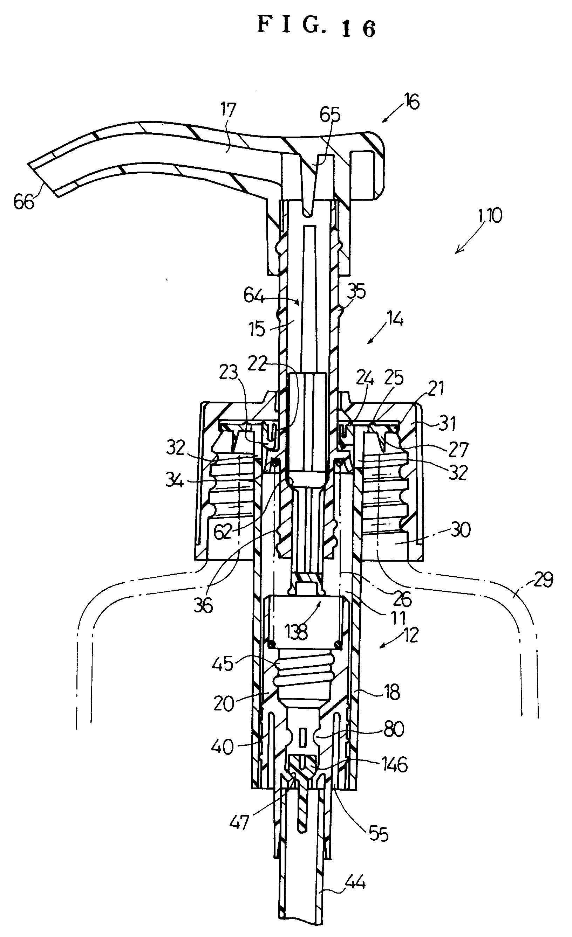

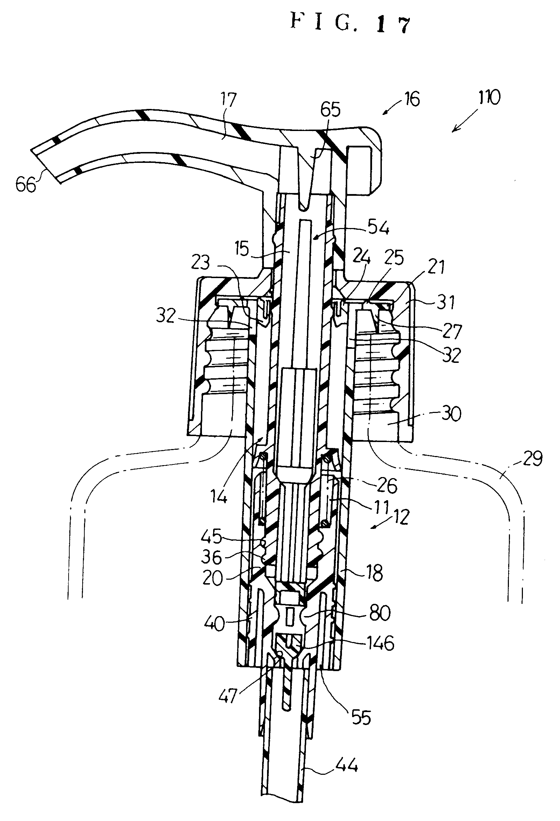

In Figs. 16 and 17 is shown a pump dispenser 110 of another embodiment. Seal means 138 for interrupting the communication between the interior of the container 29 and the pump chamber 11 in the cylinder 12 through the suction tube and the primary valve, when the piston 14 is locked, is provided under the internally threaded portion 45 between the lower portion 20 of the cylinder 12 and the piston 14. The seal means 138 is embodied as an annular seal formed in the lower end of the piston 14 in this embodiment.

When the piston 14 is threadably engaged with the lower portion 20 of the cylinder 12 and the piston 14 and the nozzle head 16 are locked, the annular seal 138 (the seal means) slidably contacts with the inner periphery of the lower portion 20 of the cylinder 12, and the communication between the atmosphere and the interior of the container 29 through the primary valve is interrupted.

Since the sliding length of the annular seal 138 is rendered large, the allowance of the associated components in assembling and molding can be made relatively large. Further, the associated components only consist of two parts, one being a cylinder 12 and the other being a piston 14. In this regard, it is unnecessary to maintain the components (the cylinder 12 and the piston 14) at high quality, leading to improved productivity and low manufacturing cost of the pump dispensers 110.

The pump dispenser 110 which is provided under the internally threaded portion 45 with the seal means 138 between the lower portion 20 of the cylinder 12 and the piston 14 can use a well-know valve made of synthetic resin and having a guide rod or a steel ball as a primary valve. In this embodiment, a valve 146 made of synthetic resin and having a guide rod is used as a primary valve and a projection 80 formed in the inner periphery of the lower portion 20 of the cylinder 12 hinders the primary valve from escaping upward.

The pump dispenser 110 has the same structure as the pump dispenser 10 except for the seal means 138 and the primary valve 146.

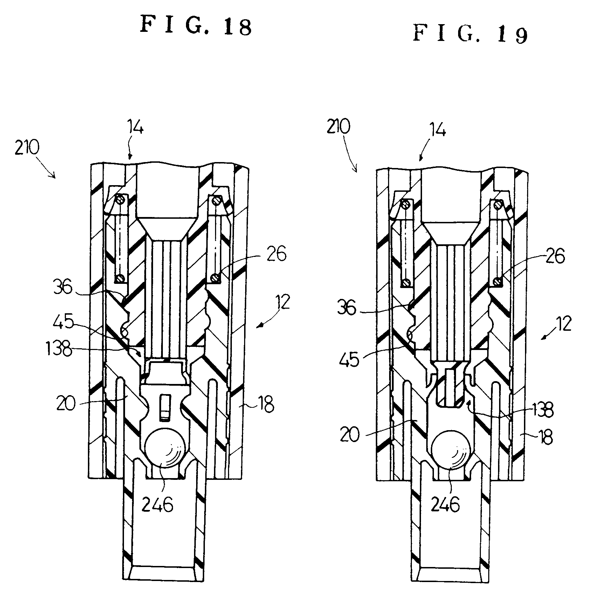

The seal means 138 is embodied in the form of an annular seal but may be a flared seal as shown in Fig. 18. Further, the seal means 138 may be a flared seal provided in the lower portion 20 of the cylinder 12 and adapted to slidably contact with the outer periphery of the lower end of the piston 14, as shown in Fig. 19.

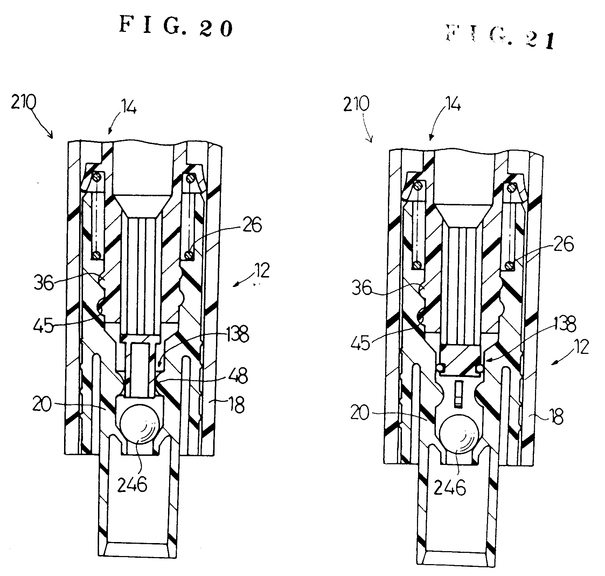

The projection 80 for preventing the primary valve from escaping normally consists of three or four divided portions. However, it may take an undivided annular shape so formed that the annular projection is adapted to slidably contact with the outer periphery of the lower end of the piston 14, as shown in Fig. 20.

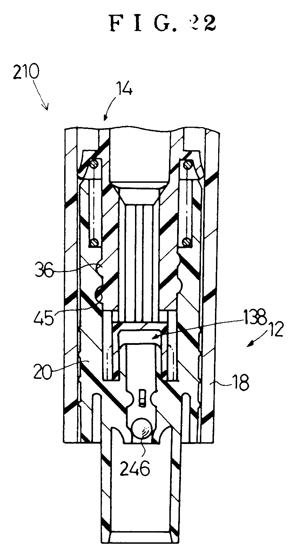

Further, an O-ring (seal means 138) provided on the lower end of the piston 14 may be formed so as to slidably contact with the inner periphery of the lower portion 20 of the cylinder 12 (Fig. 21). As shown in Fig. 22, a sleeve (seal means 138) is provided so as to extend upward from the lower portion 20 of the cylinder 12 and is adapted to slidably contact with the inner periphery of the lower end of the piston 14 or the outer periphery thereof as indicated by a one-dot chain line.

Each pump dispenser 210 as shown in Figs. 18 to 22 has the same structure as each pump dispenser 110 as shown in Figs. 16 and 17 except that the seal means is different from that of the pump dispenser as shown in Figs. 16 and 17 and a steel ball 246 is used as the primary valve.

The above-mentioned embodiments are examples for explaining this invention. Therefore, this invention is not limited to these embodiments but is applicable to various modifications which falls within the scope of this invention.

In these embodiments, the nozzle heads 16 are depressed vertically but they may be arranged to be depressed slantwise.

## Claims

1. A pump dispenser comprises a cylinder (12) fitted to a mouth portion (30) of a container (29) and defining a pump chamber (11) therein; a bottle cap (31) for fitting the cylinder (12) to the mouth portion (30) of the container (29); a suction tube (44) fixed to a lower end of the cylinder (12); a nozzle head (16) having an outlet passage (17) formed therein; a piston (14) having an outlet passage (15) communicating with the outlet passage (17) of the nozzle head (16), fixed to a lower end of the nozzle head (16) and reciprocably slidable in the cylinder (12) in cooperation with depressing operation of the nozzle head (16) against an urging force of a return spring (26) to suck liquid from the container (29) into the pump chamber (11) through the suction tube (44), pressurize the liquid and flow out the pressurized liquid through the outlet passages (15, 17) of the piston (14) and the nozzle head (16); a primary valve (46) for controlling the liquid flowing from the container (29) into the pump chamber (11) through the suction tube (44); a secondary valve (64) for controlling the liquid flowing out of the pump chamber (11); and locking means (57) for locking the nozzle head (16) and the piston (14) at a depressed position; characterized in that: the primary valve (46) is made of elastic material and includes a valve body (48) pushed by the piston (14) and forcibly pressed against a valve seat (47) when the nozzle head (16) and the piston (12) are depressed and locked, and a flared body (50) extending outwardly from the valve body (48) so as to cause elasticity and provided with an end pressed against a wall surface (47a) of the valve seat (47) under the elasticity of the flared body (50) itself.

2. The pump dispenser according to claim 1, wherein the valve body (48) of the primary valve (46) has a swollen portion (52) which extends through a hole (47b) formed in the valve seat (47) from above by expanding the hole (47b) and is prevented from slipping off upward.

3. The pump dispenser according to claim 1 or 2, wherein the end of the flared body (50) is provided with an annular projection which can make line contact with the wall surface (47a) of the valve seat (47).

4. The pump dispenser according to claim 1 or 2, wherein the end of the flared body (50) is so folded outward as to make line contact with the wall surface (47a) of the valve seat (47).

5. The pump dispenser according to any one of preceding claims 1 to 4, wherein the lock means (57) includes an externally threaded portion (36) formed on the lower end of the piston (14), an internally threaded portion (45) formed in the cylinder (12) and engaged with the externally threaded portion (36) on the piston (14), and at least one slit (56) formed in the cylinder (12) and giving elasticity to the internally threaded portion (45).

6. A pump dispenser comprises a cylinder (12) fitted to a mouth portion (30) of a container (29) by means of a bottle cap (31) and defining a pump chamber (11) therein; a suction tube (44) fixed to a lower end of the cylinder (12); a nozzle head (16) having an outlet passage (17) formed therein; a piston (14) having an outlet passage (15) communicating with the outlet passage (17) of the nozzle head (16), fixed to the lower end portion of the nozzle head (16) and reciprocably slidable in the cylinder (12) in cooperation with depressing operation of the nozzle head (16) against an urging force of a return spring (26) to suck liquid from the container (29) into the pump camber (11) through the suction tube (44), pressurize the liquid and flow out through the outlet passages (15, 17) of the piston (14) and the nozzle head (16); a primary valve (46) for controlling flow of the liquid from the container (29) into the pump chamber (11) through the suction tube (44); a secondary valve (64) for conrtolling flow of the liquid out of the pump chamber (11); and locking means (57) for locking the nozzle head (16) and the piston (14) at a depressed position, characterrized in that:

the lock means (57) includes an externally threaded portion (36) formed on the lower end of the piston (14), an internally threaded portion (45) formed in the cylinder (12) and engaged with the externally threaded portion (36) on the piston (14) when the nozzle head and the piston are depressed and locked, and at least one slit (56) formed in the cylinder (12), and giving elasticity to the internally threaded portion (45).

7. The pump dispenser according to claim 6, wherein the primary valve (46) is made of elastic material and includes a valve body (48), and a flared body (50) extending outwardly from the valve body (48), having elasticity and provided with an end pressed against the wall surface (47a) of the valve seat (47) under the elasticity of the flared body (50) itself.

8. The pump dispenser according to claim 6 or 7, wherein the cylinder (12) is divided into an upper portion (18) and a lower portion (20), the upper portion (18) having a flange (21) held between the mouth (30) of the container (29) and the bottle cap (31), an open lower end and an open upper end through which the piston (14) extends, the lower portion (20) having an upper end capable of being fitted in the upper portion (18) and a lower end to which the suction tube (44) is fixed.

9. The pump dispenser according to any one of preceding claims 6 to 8, wherein the cylinder (12) has a side wall in which is formed a vent hole (32) extending through the flange (21) of the cylinder (12), for preventing negative pressure from generating in the interior of the container (30).

10. The pump dispenser according to any one of preceding claims 6 to 8, further comprises at least two radially separated seal rings (24, 25) formed on an upper surface of the flange (21) so as to sandwich the vent hole (32).

11. The pump dispenser according to claim 6, wherein the cylinder (12) is divided into an upper portion (18) and a lower portion (20), the upper portion (18) having a flange (21) held between the mouth (30) of the container (29) and the bottle cap (31), an open lower end and an open upper end through which the piston (14) extends, the lower portion (20) having an upper end capable of being fitted in the upper portion (18) and a lower end to which the suction tube (44) is fixed, the lower portion (20) having the internally threaded portion (45) formed therein; and which further comprises seal means (138) provided under the internally threaded portion (45) between the lower portion (20) of the cylinder (12) and the piston (14), for interrupting communication between an interior of the container (29) and the pump chamber (11) through the suction tube (44) when the piston (14) is depressed together with the nozzle head (16).

12. The pump dispenser according to claim 11, wherein the seal means (138) includes an annular seal provided on the lower end of the piston (14) and slidably contacting with an inner periphery of the reduced portion of the lower portion (20) of the cylinder (12) under the internally threaded portion (45).

13. The pump dispenser according to claim 11, wherein the seal means (138) comprises a flared seal formed on the lower of the cylinder (12) under the internally threaded portion (45) and slidably contacting with an outer periphery of the lower end portion of the piston (14).

14. The pump dispenser according to claim 11, wherein the seal means (138) includes a sleeve provided on the lower end of the piston (14) and slidably contacting with an annular projection (48) of the lower portion (20) of the cylinder (12) under the internally threaded portion (45).

15. The pump dispenser according to claim 11, wherein the seal means (138) comprises an O-ring provided on the lower end of the piston (14) and slidably contacting with an inner periphery of the reduced portion of the lower portion (20) of the cylinder (12) under the internally threaded portion (45).

16. The pump dispenser according to claim 11, wherein the seal means (138) comprises a sleeve formed on the lower portion (20) of the cylinder (12) under the internally threaded portion (45) and slidably contacting with an outer periphery of the lower end of the piston (14).

17. In a pump dispenser wherein a cylinder (12) having a lower end, to which a suction tube (44) is fixed, is fitted in a mouth portion (30) of a container (29), a piston (14) fixed to a lower end of a nozzle head (16) is reciprocably slidable in the cylinder (12) in cooperation with depressing operation of the nozzle head (16) against an urging force of a return spring (26) and acts to suck up liquid from the container (29) into a pump chamber (11) defined in the cylinder (12) through the suction tube (44) and a primary valve (46), pressurize the liquid and the liquid flow out through outlet passages (15,17) formed in the piston (14) and the nozzle head (16), and the pump dispenser mounted on the container (29) is transported and displayed in a state in which the piston (14) and the nozzle head (16) are locked at a depressed position, characterized in that: the primary valve (46) is made of elastic material and includes a valve body (48) forcibly pressed against a valve seat (47) by means of the piston (14) when the nozzle head (16) and the piston (12) are locked, and a flared body (50) extending outwardly of the valve body (48), having elasticity and provided with an end pressed against a wall surface (47a) of the valve seat (47) under the elasticity of the flared body (50) itself.

18. A primary valve for a pump dispenser made of elastic material and including a valve body (48) against a valve seat (47) by a piston (14) when a nozzle forcibly pressed and a flared body (50) integrally formed together with the valve body (48), extending outwardly from the valve body (48), having elasticity and provided with an end pressed against a wall surface (47a) of the valve seat (47) under the elasticity of the flared body (50) itself.

19. The primary valve according to claim 18, which is made of synthetic resin..

20. The primary valve according to claim 18, which is made of elastomer.

# F I G. 1

# F I G. 2

F I G. 3

# FIG. 4

(A)

(B)

# F I G. 5

# F I G. 6

# F I G. 7

FIG. 8

# F I G. 9

# F I G. 1 0

# F I G. 1 1

(A)

(B)

# F I G. 12

F I G. 13

# F I G. 14

# F I G. 1 5

# F I G. 1 6

F I G. 1 7

FIG. 18

FIG. 19

F I G. 2 0

F I G. 2 1

F I G. 22

## European Patent Office

# EUROPEAN SEARCH REPORT

Application Number

EP  92 10 1383

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN<br>vol. 14, no. 378 (M-1011)15 August 1990<br>& JP-A-2 139 359 ( TADA ) 29 May 1990<br>* abstract *<br>--- | 1,6,17 | B05B11/00<br>F16K15/14 |
| A | US-A-4 524 888 (TADA)<br><br>* the whole document *<br>--- | 1,6,<br>11-17 | |
| A | FR-A-2 532 010 (REALEX CORPORATION)<br><br>* page 4, line 24 - page 7, line 3; figures 1,2<br>*<br>--- | 1,6,<br>11-17 | |
| A | US-A-3 180 534 (DUDA ET AL)<br>* column 2, line 39 - line 47; figure 1 *<br>--- | 1,6,17 | |
| A | WO-A-8 809 867 (EAGLE-PICHER INDUSTRIES INC)<br>* the whole document *<br>--- | 1-4 | |
| A | EP-A-0 065 214 (AERO-PUMP GMBH)<br><br>----- | | **TECHNICAL FIELDS SEARCHED (Int. Cl.5 )**<br><br>B05B<br>F16K |

The present search report has been drawn up for all claims

| Place of search | Date of completion of the search | Examiner |
|---|---|---|
| THE HAGUE | 07 APRIL 1992 | JUGUET J.M. |

EPO FORM 1503 03.82 (P0401)